# EUROPEAN PATENT APPLICATION

(11) **EP 4 653 357 A1**
(43) Date of publication of application: **26.11.2025**
(21) Application number: 25178674.5
(22) Date of filing: 24.05.2025
(51) Int. Cl.: B65G 59/02, A01K 43/00, B65G 61/00, B65G 65/00, B65B 23/08

(54) **DEVICE FOR DESTACKING EGG TRAYS**

(30) Priority: 24.05.2024 NL 1044882
(71) Applicant: COBOT Machinery B.V., 6716BL Ede (NL)
(72) Inventor: THOMASSEN, Gijsbert Derk, EDE (NL)
(74) Representative: de Hoog, Johannes Hendrik

(57) **Abstract**

Device for destacking a load of egg trays (1), comprising a frame (2) and a gripper (6). The device comprises a manipulator (4) for adjusting the bottom of the stacked load of egg trays in the horizontal direction, such that the higher-situated egg trays are brought within the reach of the gripper by said adjustment. The gripper comprises horizontal support pins (7) for insertion from the side between the egg trays, which support pins are spring-loaded in the longitudinal direction. The control of the manipulator is configured such that, after one of the spring-loaded pins has been inserted between the respective layer of egg trays, the gripper is moved vertically such that the remaining spring-loaded pin or pins are also inserted between the respective layer of egg trays by their spring force, after which the gripper removes the trays situated above the pins upward.

## Description

The invention relates to a device for destacking a stacked load of egg trays brought within the working area of the device, which device comprises a frame and a vertically and horizontally movable manipulator.

Such a device is known, for example, from a video found at https://www.youtube.com/watch?v=x5WSZg-RQh4. This shows a device of the applicant that destacks a pallet with stacked egg trays. This is done by removing a row of four stacks, each consisting of six egg trays, from a separation layer and placing them on a discharge conveyor. Once all stacks of egg trays have been removed from the separation layer, the separation layer itself is removed. Subsequently, the device removes the top row of stacks of six egg trays from the uppermost separation layer or, when all separation layers have been removed, from the pallet.

A drawback of the known device is that, for the device to function properly, each stack of trays offered on a pallet must be precisely vertical (1) and that, in addition, the trays must be individually precisely horizontal. However, in practice, this is often not the case, as the trays on the pallet are displaced during transport. As a result of transport or manual stacking, the stacks on the offered pallets are often not perfectly vertical (1) in practice, and the plane of many egg trays is often far from horizontal (2). The result is that the destacking of such imperfect stacks of egg trays by the respective destacker is far from trouble-free.

The present invention aims to provide a device of the type indicated in the preamble, in which a solution is provided for both mentioned problems that arise due to transport or the manual filling and stacking of egg trays by various local egg suppliers.

In short, the pallet is not perfect vertically and horizontally.

To this end, according to the invention, a device is provided for destacking a stacked load of egg trays brought within the working area of the device, which device comprises a frame and a vertical manipulator and horizontally movable gripper,
wherein the device comprises a manipulator configured to adjust the bottom of the stacked load of egg trays in the horizontal direction, such that the higher-situated egg trays, which are to be removed by the movable gripper, are brought within the reach of the movable gripper by said adjustment.

In short and simpler terms, each pallet introduced into the device with (imperfect) stacks of egg trays, (at the bottom, where the pallet is located) is manipulated/adjusted in a horizontal direction, while monitoring when the (layer of) egg trays to be removed by the gripper has come within the reach of the gripper.

To also solve the second problem, that of the trays not lying sufficiently horizontal, the gripper preferably comprises support pins extending in a horizontal plane and configured to be inserted from the side between the egg trays, which support pins are spring-loaded in the horizontal longitudinal direction,
wherein the control of the gripper is arranged such that, after one of the spring-loaded pins has been pressed between the respective layer of egg trays, the gripper is vertically moved such that the remaining spring-loaded pin or pins are also pressed between the respective layer of egg trays by their spring force, after which the gripper removes the trays lying above the pins from the stacked load in an upward direction.

The invention will now be discussed in more detail with reference to the following figure description.
Figure 1 schematically shows an embodiment of a device according to the invention;
Figure 2 shows in detail the gripper and support pins of the embodiment shown in Figure 1.

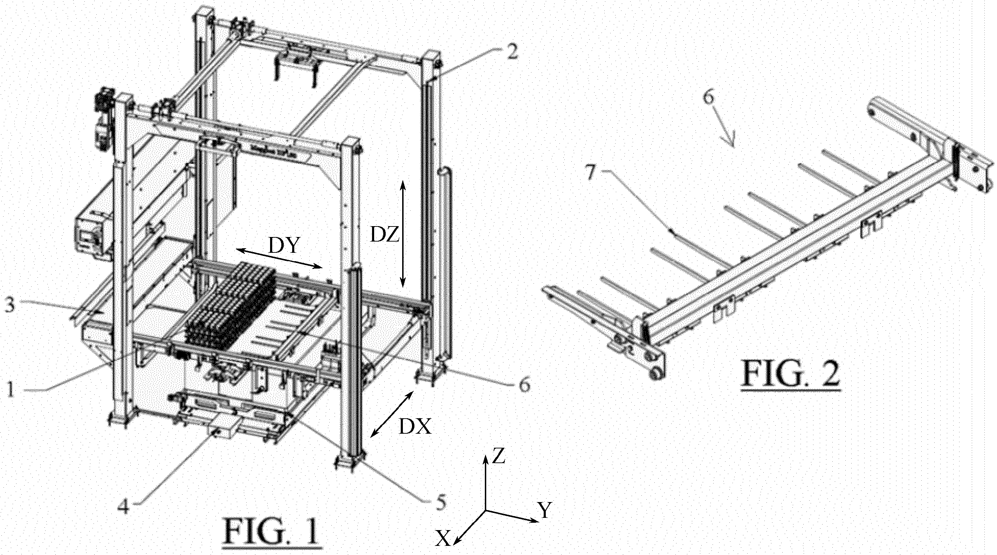

Figure 1 schematically shows an embodiment of a device according to the invention, which is configured for destacking (in stacks of 6 trays) a stacked (pallet) load of egg trays 1 brought into the working area of the device, which device comprises a frame 2 and a vertically and horizontally movable gripper 6. In Figure 1, the vertical movement of the gripper 6 is indicated by the arrow DZ, while the horizontal movement is indicated by the arrow DY.

The device comprises a manipulator 4 arranged to adjust the bottom 5 (usually a pallet) of the stacked load of egg trays in the horizontal direction (in one horizontal direction, in other words, in the X-direction), such that the higher-situated egg trays, which (in small stacks of a limited number of trays) have to be removed by the gripper 6 from the stacked pallet load of egg trays, are brought (optimally) within the reach of the drop-off point 3 by the gripper, as a result of said adjustment in the X-direction, indicated by arrow DX in Figure 1, at the level of the pallet, at the removal height of the smaller stacks of egg trays.

In this way, each pallet introduced into the device with an (imperfectly) stacked load of egg trays thereon is manipulated/adjusted in the horizontal direction at the level of the pallet, while monitoring when the bottom of a stack of egg trays to be destacked, which is to be removed by the gripper 6, has come within the reach of the gripper 6.

In other words, when the top row of smaller stacks of egg trays is not positioned directly above the pallet in the X-direction and the pallet remains stationary during destacking, this row will not be correctly positioned for the gripper 6 to remove the row of stacks without issues. Since the gripper 6 can only move in the Y-direction (DY) and the Z-direction (DZ), both of which are perpendicular to the X-direction (DX), it is often not possible to remove the top row of smaller stacks of egg trays without problems.

However, by moving the bottom 5 of the stacked load of egg trays in the X-direction (DX) using the manipulator 4, the top row of smaller stacks of egg trays can be correctly positioned for the gripper. The correct position corresponds to the situation in which the stacked load of egg trays 1 would be directly above the bottom 5, so that the gripper 6 can be inserted from the side under the bottommost layer of a stack of egg trays to be destacked. By having the manipulator 4 move the bottom in the X-direction before picking up each layer and/or row of smaller stacks, an obliquely stacked load of egg trays on a pallet can be removed without problems by the gripper 6 and placed on the drop-off point 3.

In order to also solve the problem of trays not lying horizontally, the gripper 6 comprises support pins 7 extending in a horizontal plane and are arranged to be inserted from the side between a layer of egg trays (namely, always under the bottommost layer of a stack of egg trays to be destacked), which support pins are spring-loaded in the longitudinal direction. The device comprises a control unit for controlling the gripper 6, which is arranged such that, after one of the spring-loaded pins 7 has been pressed between the respective layer of egg trays, the gripper 6 is moved vertically (DZ) such that the remaining spring-loaded pin or pins are also inserted between the respective layer of egg trays by their spring force, after which the gripper 6 removes the stack of trays lying above the pins 7 upward from the stacked pallet load.

Figure 2 shows in detail the gripper 6 and support pins 7 of the embodiment shown in Figure 1.

## Claims

1. Device for destacking a stacked load of egg trays (1) brought within the working area of the device, which device comprises a frame (2) and a vertically (DZ) and horizontally (DY) movable gripper (6),
wherein the device comprises a manipulator (4) configured to adjust the bottom (5) of the stacked load of egg trays in the horizontal direction (DX), such that the higher-situated egg trays, which are to be removed by the gripper, are brought within the reach of the gripper by said adjustment.

2. Device according to claim 1, wherein the gripper comprises support pins (7) that extend in a horizontal plane and are arranged to be inserted from the side between the egg trays, which support pins are spring-loaded in the longitudinal direction,
wherein the device comprises a control unit for controlling the gripper, configured such that, after one of the spring-loaded pins has been pressed between the respective layer of egg trays, the gripper is moved vertically such that the remaining spring-loaded pin or pins are also inserted between the respective layer of egg trays by their spring force, after which the gripper removes the tray or trays lying above the pins upwards from the stacked load.
